Europäisches Patentamt

(19) European Patent Office

Office européen des brevets

(11) Veröffentlichungsnummer: **0 234 252**
**B1**

(12) **EUROPÄISCHE PATENTSCHRIFT**

(45) Veröffentlichungstag der Patentschrifft:
07.02.90

(51) Int. Cl. ⁵: **G 11 B 23/04**

(21) Anmeldenummer: **87100644.1**

(22) Anmeldetag: **19.01.87**

(54) Sperrmechanismus für Videokassetten.

(30) Priorität: **30.01.86 DE 3602684**

(43) Veröffentlichungstag der Anmeldung:
**02.09.87 Patentblatt 87/36**

(45) Bekanntmachung des Hinweises auf die Patenterteilung:
**07.02.90 Patentblatt 90/06**

(84) Bennante Vertragsstaaten:
**BE DE FR GB IT NL**

(56) Entgegenhaltungen:
**EP-A-0 094 205**
**DE-A-2 754 935**
**DE-A-2 906 066**
**DE-A-2 910 783**
**DE-U-8 436 000**

(73) Patentinhaber: **Agfa-Gevaert AG**
**D-5090 Leverkusen 1 (DE)**

(72) Erfinder: **Freis, Rupert**
**Fabrikstrasse 48**
**D-8000 München 60 (DE)**

LIBERGRAF, STOCKHOLM 1990

EP 0 234 252 B1

2

**Beschreibung**

Die Erfindung betrifft einen Sperrmechanismus für Video-Cassetten, wobei die in den gezähnten Spulenflansch eingreifenden Sperrklinken eine besondere geometrische Form aufweisen.

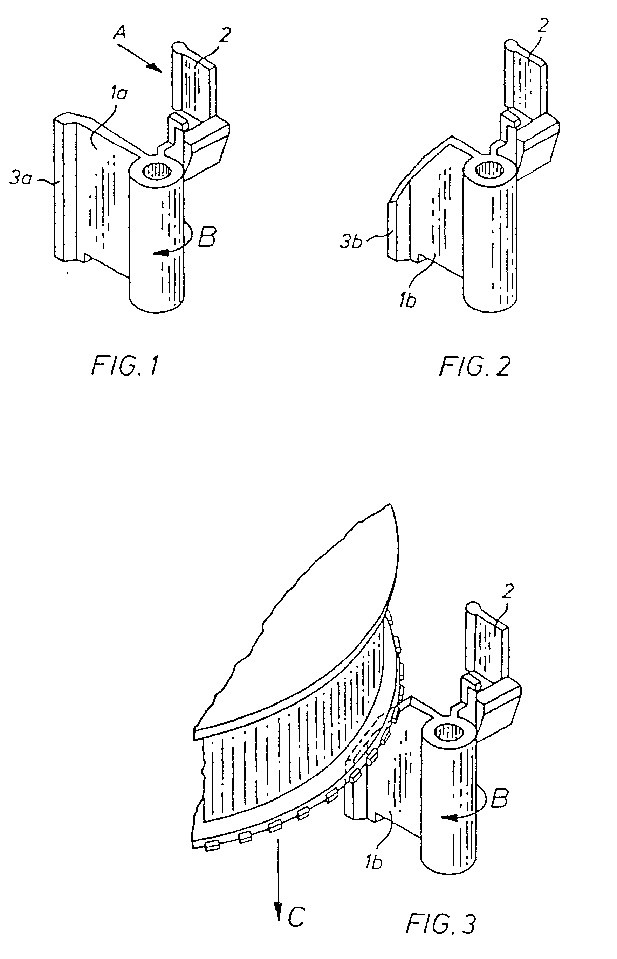

Video-Cassetten nach dem Stand der Technik, wie beispielsweise in DE-GM-8 436 000 für das VHS-System beschrieben, enthalten zwei planparallele Bandspulen, von denen das Magnetband auf- beziehungsweise abgewickelt wird. Zum Abspielen auf dem Recorder wird das Band aus der Cassette gezogen. Um ein unbeabsichtigtes Lockern des Bandwickels bei Nichtgebrauch zu verhindern, enthalten die Cassetten Sperrvorrichtungen. Wie aus obigem DE-GM, Figur 1, zu entnehmen, sind die dem Cassettenboden benachbarten Spulenflansche an ihrem Umfang gezähnt (4a, 4b). Die schwenkbar gelagerten Sperrklinken (6a, 6b) bestehen aus zweiarmigen Hebeln, deren einer Arm (7a, 7b) bei Nichtgebrauch an einer gezähnten Spule und deren zweiter Arm (9a, 9b) an einem Freigabehebel anliegt. Die Vorspannung der Sperrklinken erfolgt mittels Drahtfedern (12a, 12b) für jede der beiden Sperrklinken. Ein Federende greift an einem Hebelarm an, während das andere Ende sich an einem Stift abstützt. Beim Zusammenbau der Video-Cassetten beispielsweise in Fertigungsautomaten werden zunächst auf das Cassettenunterteil die erforderlichen Teile aufgesteckt, unter anderem die Sperrklinken nebst den Drahtfedern. Anschließend wird das Bandspulenpaar (2, 3) aufgesetzt. Dabei müssen die in den Spulenflansch eingreifenden Arme der Sperrklinken (7a, 7b) durch einen im Fertigungsautomaten angeordneten Stift, der zum richtigen Zeitpunkt den Freigabehebel (10) betätigt, über das Ausrückbauteil (11) ausgerastet werden. Wenn dieser Vorgang nicht wie geschildert abläuft, was etwa durch nicht exakte Positionierung des Cassettenunterteils oder des Bandspulenpaares im Fertigungsautomaten vorkommen kann, so können beim Einsetzen der Bandspulen deren Flansche oder aber die Sperrklinken selbst beschädigt werden, was Produktionsausschuß zur Folge hat.

Es bestand daher die Aufgabe, einen verbesserten Sperrklinkenmechanismus zu finden, der die oben aufgeführten Nachteile vermeidet.

Die Aufgabe wurde erfindungsgemäß gelöst mit einem Sperrmechanismus für Video-Cassetten mit den im kennzeichnenden Teil des Anspruchs 1 aufgeführten Merkmalen. Ausgestaltungen der Erfindung gehen aus den Unteransprüchen hervor.

Im folgenden wird die Erfindung anhand von Zeichnungen näher erläutert und zwar zeigen

Figur 1    die perspektivische Darstellung einer Sperrklinke gemäß dem Stand der Technik

Figur 2    eine perspektivische Darstellung einer Ausführungsform der erfindungsgemäßen Sperrklinke

Figur 3    eine Teilansicht des Spulenflansches mit der erfindungsgemäßen Sperrklinke während des Einsetzvorganges der Bandspule.

Figur 4a/b eine andere Ausführungsform mit abgestufter Schräge

Figur 5a/b eine weitere Ausführungsform mit abgerundeter Schräge

In Figur 1 wird dargestellt, daß der Arm 1a der Sperrklinke (der bei Nichtgebrauch der Cassette mit seinem abgewinkelten Teil 3a in den Spulenflansch eingreift), gemäß dem Stand der Technik senkrecht zur (nicht eingezeichneten) Ebene des Spulenflansches verläuft. Wegen dieser Formgestaltung ist verständlich, daß beim Aufsetzen des Bandspulenpaares die bereits erwähnten Komplikationen eintreten, falls die Sperrklinke nicht rechtzeitig zurückgeschoben ist. Dies geschieht, wie oben erläutert, durch Verschieben des am Ausrückbauteil anliegenden Armes 2 in Pfeilrichtung A. Dabei wird die Sperrklinke in Pfeilrichtung B gedreht.

Im Gegensatz dazu ist, wie in Figur 2 dargestellt, der obere Teil des Armes 1b der Sperrklinke gemäß der vorliegenden Erfindung in der Art einer Einführschräge abgeschrägt, während lediglich der untere, bei Nichtgebrauch der Cassette in den Spulenflansch eingreifende Teil 3b senkrecht verläuft. Der dadurch bewirkte Vorteil wird anhand der Figur 3 erläutert. Beim Einsetzvorgang der Bandspule auf das Cassettenunterteil in Richtung C drückt der gezähnte Flansch der Bandspule auf die abgeschrägte Fläche des Armes 1b der Sperrklinke, dabei wird die ausgeübte Kraft nach dem Kräfteparallelogramm in eine senkrechte und eine waagrechte Komponente zerlegt. Die letztere Komponente dreht die Sperrklinke in Pfeilrichtung B und schiebt damit den Arm 1b beiseite, so daß die Bandspule vollständig eingesetzt werden kann, ohne daß die anhand von Figur 1 geschilderte Betätigung des Armes 2 erfolgen muß.

Aufgrund des Kräfteparallelogramms ist die waagrechte und die senkrechte Kraftkomponente vom Winkel zwischen Bandspulenflansch und Abschrägungsfläche abhängig, mit anderen Worten, durch Wahl des Abschrägungswinkels kann die die Sperrklinke drehende Kraft innerhalb gewisser Grenzen gesteuert werden. Der Winkel kann 20 – 80°, vorzugsweise um 45°, betragen.

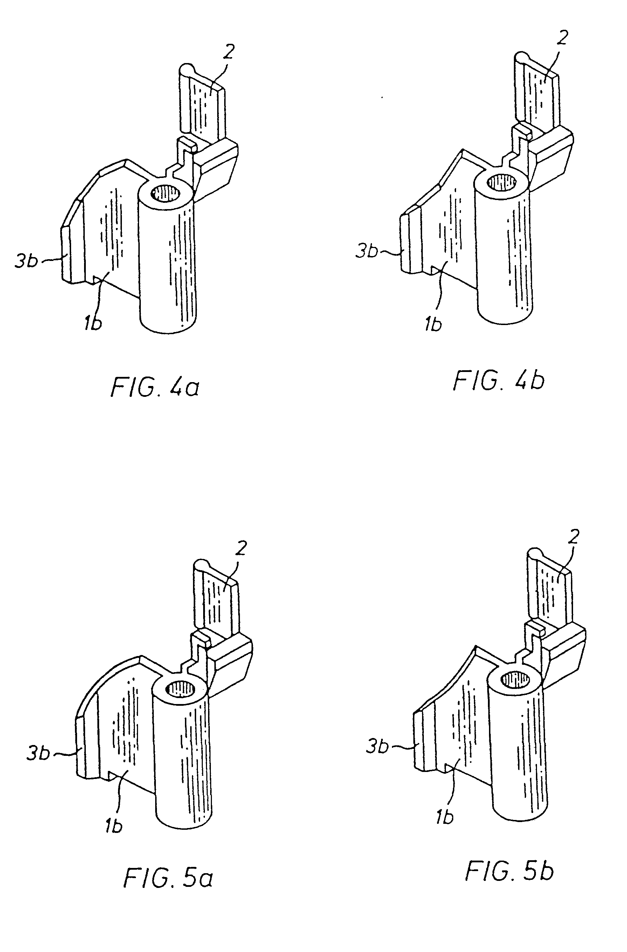

Es kann aber auch sinnvoll sein, statt der in Figur 2 dargestellten Abschrägung mit konstantem Winkel eine Form vorzusehen, bei der die Abschrägungsfläche ausgehend von der Drehachse der Sperrklinke nach außen in Richtung des Spulenflansches in mehreren Stufen zunimmt oder abnimmt. Beide Fälle werden in den Figuren 4a und 4b dargestellt. Ebenso kann die Abschrägungsfläche in einer gekrümmten Fläche, etwa in einem konkaven oder konvexen Kreisbogen verlaufen, wie in den Figuren 5a und 5b dargestellt.

In jedem Fall verläuft der untere, in den gezähnten Spulenflansch eingreifende Teil 3b des Armes 1b senkrecht zur Ebene des Spulenflan-

2

sches. Dabei beträgt die Länge des senkrechten Teils 3b etwa ein Drittel bis zwei Drittel der Länge der Kante 3a bei einer Sperrklinke gemäß dem Stand der Technik. Die Abschrägungsfläche verläuft so weit in Richtung der Drehachse der Sperrklinke, daß in jedem Fall auch bei Berücksichtigung von Positionierungstoleranzen bei der Montage der Flansch der Bandspule beim Aufsetzen auf die Einführschräge trifft. Das ist dann gewährleistet, wenn die Abschrägungsfläche der erfindungsgemäßen Sperrklinke im Bereich des die Bandspulen einfassenden peripheren Steges des Cassettenunterteils beginnt.

Vorstehend wurde die Erfindung am Beispiel einer VHS-Video-Cassette geschildert. Selbstverständlich läßt sich die erfindungsgemäße Sperrklinke auch bei einem anderen Cassetten-System, welches Sperrklinken besitzt, mit dem gleichen Vorteil anwenden, beispielsweise im Betamax-System, welches in der DE-OS-2 906 066 beschrieben ist, ohne daß damit der Rahmen der Erfindung verlassen wird.

## Patentansprüche

1. Video-Cassette mit zwei planparallel angeordneten Spulen zum Auf- und Abwickeln eines Magnetbandes und mit einem Sperrmechanismus bestehend aus einer auf einem Pfosten aufsteckbaren, schwenkbaren, zweiarmigen Sperrklinke für jede Spule, wobei in Außerbetriebsstellung der Cassette mittels der durch einen Federwendel bewirkten Vorspannung ein Hebelarm der Sperrklinke an dem Ausrückbauteil eines Freigabehebels anliegt und der andere Hebelarm in einen gezähnten Spulenflansch greift, wobei der untere in den Spulenflansches eingreifende Teil (3b) senkrecht zur Ebene des Spulenflansches verläuft, dadurch gekennzeichnet, daß der in den Spulenflansch eingreifende Hebelarm (1b) an seinem oberen Teil bis ungefähr zu seiner halben Höhe eine Abschrägung besitzt, welche unter einem Winkel von 20 – 80° zur Ebene des Spulenflansches verläuft.

2. Video-Cassette nach Anspruch 1, dadurch gekennzeichnet, daß die Höhe des unteren in den Spulenflansch eingreifenden Teils (3b) der Sperrklinke ein Drittel bis zwei Drittel der Gesamthöhe (3a) der Sperrklinke ausmacht.

3. Video-Cassette nach den Ansprüchen 1 und 2, dadurch gekennzeichnet, daß die Abschrägungsfläche der Sperrklinke ausgehend von deren Drehachse im Bereich des die Bandspulen umgebenden peripheren Steges des Cassettenunterteils beginnt.

4. Video-Cassette nach Anspruch 1 – 3, dadurch gekennzeichnet, daß die Abschrägung des oberen Teils des Hebelarms 1b in mehreren Stufen ausgeführt ist, wobei der Winkel zwischen Abschrägung und Ebene des Spulenflansches nach unten stufenweise zunimmt oder abnimmt.

5. Video-Cassette nach Anspruch 1 – 3, dadurch gekennzeichnet, daß die Abschrägung des oberen Teils des einen Hebelarms (1b) in einer gekrümmten Linie erfolgt, wobei der Winkel der Abschrägung zur Ebene des Spulenflansches nach unten stufenlos zunimmt oder abnimmt.

## Claims

1. Video cassette having two plane-parallel reels for winding and unwinding a magnetic tape and having a locking mechanism consisting of a pivotable, two-armed catch which can be pushed onto a peg, for each reel, when the cassette is not operating the initial tension due to a helical spring causes one lever arm of the catch to rest against the disengaging component of a release lever and the other lever arm engages a toothed reel flange, the lower part (3b) which engages the reel flange being perpendicular to the plane of the reel flange, characterised in that the lever arm (1b) engaging the reel flange has a bevel at an angle of 20 – 80°C to the plane of the reel flange, the said bevel being on the upper part of the said lever arm and extending to approximately half its height.

2. Video cassette according to Claim 1, characterised in that the height of the lower part (3b) of the catch, which part engages the reel flange, is one third to two thirds of the total height (3a) of the catch.

3. Video cassette according to Claims 1 and 2, characterised in that the bevelled surface of the catch starting from its axis of rotation begins in the region of the web of the lower part of the cassette, which web surrounds the tape reels.

4. Video cassette according to Claims 1 – 3, characterised in that the bevel of the upper part of the lever arm 1b has several stages, the angle between the bevel and the plane of the reel flange increasing or decreasing stepwise in a downward direction.

5. Video cassette according to Claims 1 – 3, characterised in that the bevel of the upper part of one lever arm (1b) has a curved line, the angle of the bevel with respect to the plane of the reel flange increasing or decreasing steplessly in the downward direction.

## Revendications

1. Vidéo-cassette comportant deux bobines planes et parallèles servant à bobiner et à débobiner une bande magnétique et un mécanisme de blocage composé d'un cliquet de blocage à deux bras pour chaque bobine, pouvant être enfilé sur une colonnette et pivotant, un bras de levier du cliquet de blocage prenant appui sur l'élément de débrayage d'un levier libérateur en position hors service de la cassette au moyen de la force de tension préalable d'un ressort spiral, et l'autre bras de levier s'engageant dans une joue crantée de la bobine, la partie inférieure (3b) qui s'engage dans la joue de la bobine étant perpendiculaire au plan de la joue de la bobine, caractérisée par le fait que le bras de levier (1b) qui s'engage dans la joue de la bobine présente, sur sa partie supérieure jusqu'à environ la moitié de sa hauteur, un biseau formant un angle de 20 – 80° avec le plan de la joue de la bobine.

2. Vidéo-cassette selon la revendication 1, caractérisée par le fait que la hauteur de la partie inférieure (3b) du cliquet de blocage qui s'engage dans la joue de la bobine est d'un tiers à deux tiers de la hauteur totale (3a) du cliquet de blocage.

3. Vidéo-cassette selon les revendications 1 et 2, caractérisée par le fait que la surface biseautée du cliquet de blocage s'amorce partant de l'axe de rotation de celui-ci dans la région de l'ailette périphérique de la partie inférieure de la cassette qui entoure les bobines.

4. Vidéo-cassette selon les revendications 1 – 3, caractérisée par le fait que le biseau de la partie supérieure du bras de levier (1b) est exécuté en plusieurs paliers, l'angle compris entre le biseau et le plan de la joue de la bobine augmentant ou diminuant par paliers en direction du bas.

5. Vidéo-cassette selon les revendications 1 – 3, caractérisée par le fait que le biseau de la partie supérieure d'un bras de levier (1b) est exécuté en ligne incurvée, l'angle du biseau au plan de la joue de la bobine augmentant ou diminuant sans palier en direction du bas.

*FIG. 1*

*FIG. 2*

*FIG. 3*

FIG. 4a

FIG. 4b

FIG. 5a

FIG. 5b